# EUROPÄISCHE PATENTSCHRIFT

(11) **EP 3 283 694 B1**
(45) Veröffentlichungstag und Bekanntmachung des Hinweises auf die Patenterteilung: **15.01.2020**
(21) Anmeldenummer: 16715796.5
(22) Anmeldetag: 07.04.2016
(51) Int. Cl.: E02D 27/44, E02D 27/50, E02D 27/42, F16M 7/00

(54) **FUNDAMENTVERANKERUNG FÜR ARBEITSMASCHINE**
FOUNDATION ANCHORING FOR A WORKING MACHINE
ANCRAGE DE MACHINE DE TRAVAIL À UNE FONDATION

(30) Priorität: 14.04.2015 DE 102015004828
(43) Veröffentlichungstag der Anmeldung: 21.02.2018
(73) Patentinhaber: Liebherr-Werk Biberach GmbH, 88400 Biberach an der Riss (DE)
(72) Erfinder: MAYER, Joachim, 88400 Biberach (DE)
(74) Vertreter: Laufhütte, Dieter
(86) Internationale Anmeldenummer: PCT/EP2016/000574
(87) Internationale Veröffentlichungsnummer: WO 2016/165816

(56) Entgegenhaltungen:
- EP-A1- 2 481 853
- DE-A1- 10 025 636
- DE-A1-102011 102 985

## Beschreibung

Die vorliegende Erfindung betrifft eine Vorrichtung zum Verankern einer Arbeitsmaschine an einem Fundament sowie ein Verfahren zum Verankern einer Arbeitsmaschine an einem Fundament und ein Verfahren zur Demontage einer Verankerung einer Arbeitsmaschine an einem Fundament.

Die Standfestigkeit für den ordnungsgemäßen Betrieb einer Arbeitsmaschine hängt üblicherweise vom Ausmaß der angreifenden Kräfte, beispielsweise Druck-, Zug- oder auch Torsionskräfte, sowie der bodenseitig durchgeführten Verankerung der Arbeitsmaschine ab. Eine ideale Einleitung der auftretenden Kräfte in den Standort der Arbeitsmaschine erhöht die Standfestigkeit und folglich die mögliche Belastung der Maschine.

So muss z. B. die Verankerung eines Kranturms in einem Ortbetonfundament die auftretenden Kräfte aus dem Kranturm in das Fundament ableiten. Die Einleitung der Druckkräfte erfolgt typischerweise über entsprechende Druckkontaktflächen. Die anliegenden Zugkräfte müssen entweder ebenfalls über diese Kontaktflächen, dann jedoch in umgekehrter Richtung, oder aber über zusätzliche Zugelemente in das Fundament eingeleitet werden.

Für die mögliche Verankerung bekannter Turmdrehkrane in einem bauseits hergestellten Betonfundament sind bereits verschiedenste Lösungen bekannt. So ist beispielsweise die Verwendung von Verankerungsfüßen bekannt, meist als Fundamentanker bezeichnet, die vor dem Betonieren des Fundaments positioniert und ausgerichtet werden und nach Herstellung einer Betonbewehrung fest eingegossen werden.

Um eine möglichst große Wiederverwertbarkeit der Verankerungsfüße zu erreichen, offenbart der Stand der Technik verschiedene Lösungen. Typischerweise enthalten diese Lösungen Verankerungselemente, die mit der Arbeitsmaschine, insbesondere dem Turm eines Kranes, und dann bauseits mit dem Fundament zugfest verbunden sind. Hierzu werden meist Steinschrauben, Gewindestangen mit Gegenplatten oder ähnliche Bauteile verwendet.

Hierbei besteht jedoch die Gefahr, dass bei der Montage der herkömmlichen Verankerung einer Arbeitsmaschine, der Herstellung des einen Teil der Verankerung umgebenden Fundaments und/oder während des Vorspannvorgangs der Verankerung eine Verbindung des Zugelementes mit dem Fundament beziehungsweise einem in das Fundament einzugießenden Element in ungewollter Weise gelöst wird. Dies hat zur Folge, dass die Sicherheit der Verankerung nicht mehr gewährleistet ist und ein sicherer Betrieb der durch die Verankerung gehaltenen Arbeitsmaschine nicht möglich ist.

So offenbart beispielsweise die EP 2 481 853 A1 eine Fundamentverankerung für eine Arbeitsmaschine, die jedoch anfällig für das oben geschilderte Problem ist.

Andere im Stand der Technik vorgeschlagene Versuche das obige Problem zu umgehen, schlagen meist die Verwendung von Gewindestangen vor, an denen die Arbeitsmaschine befestigt werden kann, wobei jedoch die Gewindestangen in das Fundament eingegossen werden, sich dabei mit dem Fundament fest verbinden, und sich bei der Demontage der Arbeitsmaschine nicht mehr von dem Fundament trennen lassen. Hierbei ist zwar ein unbeabsichtigtes Lösen beim Vorspannen der Verankerungsfüße nahezu ausgeschlossen, jedoch sind die Kosten für die verlorenen Bauteile hoch.

Aus der DE 10 2011 102 985 A1 ist ein Schwerlastanker mit einer oberen und einer unteren Ankerplatte bekannt, welche über ein Hüllrohr miteinander verbunden sind. In dem Hüllrohr ist eine Ankerstange angeordnet, deren unterer Kopf eine Außenkontur aufweist, die im Wesentlichen der Innenkontur einer Ausnehmung der unteren Ankerplatte entspricht, sodass nach entsprechender Ausrichtung der Ankerstange zur unteren Ankerplatte die Ankerstange nicht mehr zurückgezogen werden kann.

Die Aufgabe der vorliegenden Erfindung besteht nun darin, eine Verankerungsvorrichtung zu schaffen, die sich bei der Montage, der Herstellung des Fundaments und/oder während des Vorspannvorgangs nicht unbeabsichtigterweise von dem Kraftschluss mit einem Fundament beziehungsweise mit einem in dem Fundament einzugießenden Element lösen kann. Gleichzeitig soll jedoch die Menge an wiederverwendbaren Materialien möglichst hoch sein, um die Kosten für ein Verankern einer Arbeitsmaschine gering zu halten.

Die genannte Aufgabe wird durch die Vorrichtung zum Verankern einer Arbeitsmaschine an einem Fundament mit den Merkmalen nach Anspruch 1 gelöst.

Demnach umfasst die Vorrichtung zum Verankern einer Arbeitsmaschine an einem Fundament eine Aufnahmeplatte zum Auflegen auf ein Fundament, eine Gegenplatte zum Eingießen in das Fundament, ein Hohlrohr, das die Aufnahmeplatte mit der Gegenplatte verbindet und von der von der Gegenplatte abgewandten Seite der Aufnahmeplatte zu seiner Innenseite zugänglich ist, und ein Zugelement zum Einführen in das Hohlrohr, wobei das Zugelement durch eine Drehbewegung lösbar mit der Gegenplatte verankerbar ist. Die Vorrichtung ist ferner dadurch gekennzeichnet, dass sie ein Drehsicherungselement umfasst, das mit einer Außenkontur des Zugelements in Verbindung steht und dieses drehfest anordnet.

Typischerweise wird zur Verankerung der Vorrichtung ein das Fundament bildender, flüssiger Beton um die stehende Verankerungsvorrichtung gegossen. Die Aufnahmeplatte liegt nach einem Aushärtevorgang des Betonfundaments auf der Oberfläche des Fundaments auf. Von der Aufnahmeplatte erstreckt sich, vorzugsweise einstückig, ein Verankerungsfuß, an dem die Arbeitsmaschine befestigt werden kann. Es ist jedoch auch denkbar, dass die Aufnahmeplatte erst nach einem Aushärtevorgang des Fundaments aufgelegt wird, und mit den weiteren Elementen der Verankerungsvorrichtung zusammengefügt wird.

Die Gegenplatte zum Eingießen in das Fundament ist vorzugsweise in etwa parallel zur Aufnahmeplatte beziehungsweise parallel zur Fundamentoberfläche angeordnet, weist jedoch einen gewissen Abstand zur Aufnahmeplatte auf. Beim Gießen des Betonfundaments wird die Gegenplatte typischerweise in das Fundament eingegossen, um später Zugkräfte besonders wirkungsvoll in das Fundament ableiten zu können.

Das die Aufnahmeplatte und die Gegenplatte miteinander verbindende Hohlrohr kann vorzugsweise einen kreisförmigen Querschnitt aufweisen. Ferner ist das Hohlrohr von der Seite der Aufnahmeplatte, die von dem Fundament beziehungsweise von der in das Fundament einzugießenden Gegenplatte abgewandt ist, zu seiner Innenseite hin zugänglich. Das Hohlrohr umgibt das Zugelement, das einen Abschnitt aufweist, der in einem mit der Gegenplatte verankertem Zustand des Zugelements aus dem Hohlrohr in Richtung zur von der Gegenplatte abgewandten Seite der Aufnahmeplatte hervorsteht. Die Länge des Hohlrohrs ist demnach vorzugsweise geringer als die Länge des Zugelements.

Das Zugelement ist in das Hohlrohr einführbar und kann mit Hilfe einer Drehbewegung lösbar mit der Gegenplatte verankert werden. Denkbar ist beispielsweise, dass das Zugelement an seinem der Gegenplatte nahem Ende ein Gewinde aufweist, das mit einem Gewinde in der Gegenplatte oder mit einem Verankerungsmittel zum Verankern der Gegenplatte mit dem Zugelement eingreift. Vorzugsweise ist das Zugelement eine Stange, die durch eine Drehbewegung des Zugelements um seine Längsachse herum lösbar mit der Gegenplatte verankerbar ist. Hierbei ist es also möglich, ein mit der Gegenplatte verankertes Zugelement durch eine Drehbewegung um seine Längsachse herum aus dem mit der Gegenplatte, oder einem Verankerungselement, verankertem Zustand zu lösen und aus dem Hohlrohr zu entnehmen. Das Drehsicherungselement, das mit einer Außenkontur des Zugelements in Verbindung steht und dieses drehfest anordnet, steht derart mit dem Zugelement in Verbindung, dass eine Rotation des Zugelements, die zu einem Lösen mit der Verankerung an der Gegenplatte führen könnte, ausgeschlossen ist. Dabei kann das Drehsicherungselement so ausgeführt sein, dass es das Zugelement vollständig umgreift. Zudem ist vorzugsweise möglich, dass das Drehsicherungselement auf der Seite der Aufnahmeplatte vorgesehen ist, die von der Gegenplatte abgewandt ist.

Diese Vorrichtung weist den Vorteil auf, dass es nicht möglich ist, die Verankerung des Zugelements mit der Gegenplatte ungewollterweise bei der Montage der Verankerung, bei der Herstellung des Fundaments und/oder während des Vorspannvorgangs der Verankerungsvorrichtung zu lösen. Dennoch ist es möglich, das Zugelement aus dem mit der Gegenplatte verankertem Zustand zu lösen und wiederzuverwenden, wodurch die Gesamtkosten der Verankerungsvorrichtung sinken. Das Drehsicherungselement verhindert das Lösen der Verankerungsverbindung und stellt somit die Tragfähigkeit des Zugelements sicher. Ein Verbund des Zugelements mit dem Betonfundament ist deswegen nicht notwendig.

Erfindungsgemäß ist das Drehsicherungselement auf der von der Gegenplatte abgewandten Seite der Aufnahmeplatte angeordnet oder durch die Aufnahmeplatte gebildet. Dieses Merkmal bewirkt, dass das Drehsicherungselement nicht durch das Fundament eingegossen wird, sondern sich oberhalb der auf das Fundament aufzulegenden Aufnahmeplatte befindet. Daher ist es möglich, dass Drehsicherungselement bei weiteren Verankerungsvorrichtungen wieder zu verwenden. Ein weiterer Vorteil liegt darin, dass bei einem Vorspannvorgang, der typischerweise durch Anlegen eines Drehmoments an das Zugelement ausgeführt wird, von oben in das Zugelement eingeleitete Momente direkt oberhalb (auf der von der Gegenplatte abgewandten Seite der Aufnahmeplatte) durch das Drehsicherungselement abgeleitet werden. Somit wird das Zugelement vor Torsionskräften bewahrt, die über die gesamte Länge des Zugelements wirken. Dadurch ist es möglich, das Zugelement schmaler auszuführen und Material einzusparen.

Ferner umfasst das Drehsicherungselement erfindungsgemäß ein Durchgangsloch, dessen Innenquerschnitt einem Außenquerschnitt des Zugelements entspricht. Dadurch ist es möglich, das Drehsicherungselement auf dem Abschnitt des Zugelements aufzustecken, der sich aus der Aufnahmeplatte heraus in Richtung der von der Gegenplatte abwandten Seite der Aufnahmeplatte erstreckt. Das Zugelement wird hierbei einfach durch das Durchgangsloch des Drehsicherungselements gesteckt und auf die Aufnahmeplatte aufgelegt.

Erfindungsgemäß umfasst die Vorrichtung ferner ein Arretiermittel, das an der von der Gegenplatte abgewandten Seite der Aufnahmeplatte ortsfest angeordnet ist, zum drehstarren fixieren des Drehsicherungselements bzw. des damit in Wirkverbindung stehenden Zugelements. Durch das Arretiermittel wird das Drehsicherungselement, das drehstarr mit dem Zugelement gekoppelt ist, derart arretiert, dass eine Drehung des Drehsicherungselements nicht mehr möglich ist.

Vorzugsweise wird hierfür eine oder mehrere Anschlagleisten als Arretiermittel verwendet. Diese Anschlagleisten werden auf der Aufnahmeplatte ortsfest angeordnet und wirken mit dem Drehsicherungselement so zusammen, dass eine Rotation des Zugelements um seine Längsachse unterbunden wird. Als Arretiermittel ist jedoch auch ein anderes Mittel als eine Anschlagsleiste denkbar. So ist beispielsweise ein Arretierpunkt vorstellbar, der auf der Aufnahmeplatte so angeordnet ist, dass er ein Drehen des Drehsicherungselements, das in einer Wirkverbindung mit dem Zugelement steht, nicht zulässt.

Darüber hinaus ist es vorteilhaft, wenn das Zugelement an dem zur Gegenplatte nahen Ende ein Gewinde aufweist, das mit der Gegenplatte selbst und/oder mit einem Verankerungsmittel, das an der von der Aufnahmeplatte abgewandten Seite der Gegenplatte angeordnet ist, verschraubbar ist.

Damit das Zugelement mit einem Verankerungselement zusammenwirken kann, das an der von der Aufnahmeplatte abgewandten Seite der Gegenplatte angeordnet ist, ist eine Ausnehmung der Gegenplatte notwendig, durch die das Zugelement hindurchdringt und wobei an der von der Aufnahmeplatte abgewandten Seite der Gegenplatte ein mit dem Zugelement verbindbares Verankerungselement angeordnet ist. Vorzugsweise ist das Verankerungselement in einer bestimmten Ausrichtung zur Gegenplatte so groß, dass es nicht durch die Ausnehmung der Gegenplatte treten kann. Zudem sollte es in dieser Stellung auch mit dem durch die Ausnehmung der Gegenplatte hindurchstossenden Zugelement durch eine Drehbewegung verbindbar sein. Vorzugsweise ist das Verankerungselement eine zu dem Gewinde des Zugelements entsprechende Mutter, die eine Schraubverbindung mit dem am Ende des Zugelements angeordneten Gewinde (Schraubenvater) eingehen kann.

Vorzugsweise liegt das Drehsicherungselement auf der von der Gegenplatte abgewandten Seite der Aufnahmeplatte auf. Dadurch ist das Drehsicherungselement in besonders einfacher Weise von einer Rotation abzuhalten. Typischerweise ist das Verankerungselement durch das zu gießende Fundament starr angeordnet.

Nach einem optionalen Merkmal der Erfindung entspricht der Innenquerschnitt des Durchgangslochs in einem Abschnitt einem Rundloch, einem Dreikant, einem Vierkant, einem Fünfkant, einem Sechskant, einem Siebenkant, einem Achtkant, einem Neunkant, einem Zehnkant, einem Elfkant oder einem Zwölfkant.

Weiter vorzugsweise ist an dem Zugelement ein Gewinde an seinem zur Aufnahmeplatte nahen Ende vorhanden, das zu einem Verspannmittel eingreifbar ausgebildet ist. Hierbei ist es von Vorteil, wenn das Verspannmittel ein zu dem Gewinde an dem zur Aufnahmeplatte nahen Ende des Zugelements passendes Gewinde aufweist, um das Zugelement zwischen Aufnahmeplatte und Gegenplatte zu verspannen. Hierfür wird vorteilhafterweise eine Mutter verwendet, die auf den aus dem Hohlrohr in Richtung der Aufnahmeplatte hervorstehenden Abschnitt des Zugelements aufgesetzt wird, so dass das an der Gegenplatte verankerte Zugelement durch ein Drehen der Mutter in Richtung der Aufnahmeplatte zwischen Aufnahmeplatte und Gegenplatte verspannt wird. Hierbei ist es nicht notwendig, dass das Verspannmittel unmittelbar auf der Aufnahmeplatte aufliegt. Vielmehr kann es von Vorteil sein, dass das Verspanmittel das Bauteil ist, das am nächsten an dem aus der Aufnahmeplatte herausragenden Ende des Zugelements angeordnet ist. Vorzugsweise ist das Verspannmittel mit einer Scheibe versehen, die die von dem Verspannmittel ausgeübten Kräfte gleichmäßig verteilt.

Darüber hinaus ist vorteilhafterweise ferner ein Verspannmittel an der Vorrichtung denkbar, das in Eingriff mit dem Zugelement steht und das Drehsicherungselement in Richtung der Seite der Aufnahmeplatte drängt, die von der Gegenplatte abgewandt ist. Hierdurch wird ein Verspannen des Zugelements in einer besonders einfachen Art und Weise ermöglicht. Vorzugsweise ist das Verspannmittel eine Mutter mit oder ohne Beilegscheibe, die das Drehsicherungselement in Richtung der Aufnahmeplatte drückt. Vorzugsweise umfasst das Drehsicherungselement ein Innenteil, das mit der Außenkontur des Zugelements direkt in Verbindung steht.

Durch Vorsehen einer mehrgliedrigen Ausführung des Drehsicherungselements ist es möglich, Teile, die einen größeren Verschleiß oder einer größeren Arbeitsbeanspruchung unterliegen, unabhängig von Teilen des Drehsicherungselements zu tauschen, die einem geringeren Verschleiß unterliegen. So ist das Innenteil, das mit der Außenkontur eines Zugelements in Verbindung steht relativ verschleißarm, wohingegen das Außenteil des Drehsicherungselements an dem typischerweise ein Verspannmittel aufliegt, öfters ausgetauscht werden muss. Insgesamt führt dies zu einem geringeren Kostenanfall, da ein unabhängiges Austauschen der beiden Teile (Innenteil und Außenteil) möglich ist. Zudem ist die Fertigung der beiden voneinander getrennten Teile weniger aufwendig als die Fertigung eines diese beiden Teile enthaltenden Kombinationsteils.

In dieser Variante ist das Innenteil vorzugsweise ein Spannelement, das durch eine Klemmverbindung drehstarr an die Außenkontur des Zugelements angebracht werden kann. Die Klemmverbindung kann durch zwei jeweils circa die Hälfte eines Umfangsabschnitts des Zugelements umgebenden Klemmverbindungselemente ausgeführt sein, die durch eine Schraub- und/oder Spannverbindung an dem Zugelement derart befestigt werden, dass eine Drehung des Zugelements unabhängig von einer Drehung der Klemmverbindung nicht mehr ausführbar ist. Weiter vorzugsweise kann die Klemmverbindung auch mit Hilfe einer Schraubverbindung, mit der beide Klemmverbindungselemente aufeinanderzubewegbar sind, ausgeführt werden.

Dabei kann das Zugelement als eine Gewindestange ausgeführt sein, die vorzugsweise in ihren beiden Enden eine kleinere Querschnittsfläche aufweist als in einem die beiden Enden verbindenden Abschnitt. Dadurch wird beim Ausüben einer Drehbewegung des Zugelements, beziehungsweise der daraus resultierenden Torsionsmomente, einer Beschädigung des Zugelements in dem mit dem größeren Querschnitt versehenden Abschnitt vorgegriffen.

Zudem ist es von Vorteil, wenn das Zugelement an seinen beiden Enden eine kreisförmige Querschnittsfläche aufweist und in einem zwischen den beiden Enden liegenden Abschnitt eine davon verschiedene Querschnittsfläche aufweist. So ist es möglich, dass an beiden Enden des Zugelements Gewinde vorhanden sind, das zum einen mit einem Verankerungselement beziehungsweise der Gegenplatte in ein Gegengewinde einschraubbar ist und zum anderen mit dem Verspannmittel verbindbar ist.

Vorzugsweise weist das Zugelement in einem mit der Gegenplatte verankerten Zustand auf der von der Gegenplatte abgewandten Seite der Aufnahmeplatte einen Abschnitt auf, der in seinem Querschnitt einem Rundloch, einem Dreikant, einem Vierkant, einem Fünfkant, einem Sechskant, einem Siebenkant, einem Achtkant, einem Neunkant, einem Zehnkant, einem Elfkant oder einem Zwölfkant entspricht. Darüber hinaus ist jeder Querschnitt des Zugelements von Vorteil, der nicht punktsymmetrisch ist. Hierbei ist nämlich ein Aufsetzen eines entsprechend ausgeformten Durchgangslochs eines Drehsicherungselements, das drehstarr fixiert ist, dazu in der Lage, eine Drehung des Zugelements auch ohne Klemmverbindung von Zugelement und Drehsicherungselement zu unterbinden.

Vorteilhafterweise ist ebenfalls denkbar, dass die Aufnahmeplatte einen Zapfen und/oder eine Zapfenaufnahme zum Befestigen der Arbeitsmaschine aufweist, wobei der Zapfen und/oder die Zapfenaufnahme senkrecht von der von der Gegenplatte abgewandten Seite der Aufnahmeplatte absteht. Der Zapfen und/oder die Zapfenaufnahme stellen Verbindungselemente dar, mit Hilfe der die zu sichernde Arbeitsmaschine mit der Verankerungsvorrichtung verbindbar ist. Dem Fachmann ist klar, dass solche Zapfen/Zapfenaufnahmen viele verschiedene Ausgestaltungen annehmen können, ohne ihre grundsätzliche Wirkung zu verlieren.

Darüber hinaus offenbart die vorliegende Verbindung ein Verfahren zur Verankerung einer Arbeitsmaschine an einem Fundament mit einer Vorrichtung nach einer der vorstehend beschriebenen Ausführungen, wobei die Vorrichtung vollständig außerhalb des Einsatzortes vormontiert und am Einsatzort positioniert und ausgerichtet wird, bevor das Fundament gegossen wird.

Ferner offenbart die vorliegende Erfindung ein Verfahren zur Demontage einer Ankervorrichtung nach einer der vorstehend beschriebenen Ausführungen, in dem ein Verspannmittel, vorzugsweise eine Mutter, das in Eingriff mit einem Zugelement steht, gelöst wird, ein Drehsicherungselement, das in einem montierten Zustand das Zugelement drehstarr fixiert, abgehoben und/oder demontiert wird und eine Drehbewegung des Zugelements ausgeführt wird um eine Verankerungsverbindung mit einer Gegenplatte oder mit einem das Zugelement an der Gegenplatte verankernden Verankerungselement zu lösen.

Weitere Vorteile und Eigenschaften der Erfindung werden anhand der in den Figuren dargestellten Ausführungsbeispiele näher erläutert. Es zeigen:
- Fig. 1:: ein erstes Ausführungsbeispiel einer erfindungsgemäßen Vorrichtung in einer Seitenansicht,
- Fig. 2:: ein zweites Ausführungsbeispiel einer Verankerungsvorrichtung in einer Seitenansicht,
- Fig. 2a:: ein Drehsicherungselement der zweiten Ausführungsform in einer Draufsicht,
- Fig. 2b:: eine Draufsicht auf die zweite Ausführungsform der Verankerungsvorrichtung ohne Verspannmittel,
- Fig. 3:: eine dritte Ausführungsform der Verankerungsvorrichtung in einer Seitenansicht,
- Fig. 3a:: eine Draufsicht auf das Drehsicherungselement der dritten Ausführungsform der Verankerungsvorrichtung,
- Fig. 3b:: eine Draufsicht auf die dritte Ausführungsform der Verankerungsvorrichtung ohne Verspannmittel,
- Fig.4:: eine vierte Ausführungsform der Verankerungsvorrichtung in einer Seitenansicht,
- Fig. 4a:: eine Draufsicht auf das Drehsicherungselement der vierten Ausführungsform,
- Fig. 4b:: eine Draufsicht auf die vierte Ausführungsform der Verankerungsvorrichtung ohne Verspannmittel,
- Fig. 5:: eine Gesamtdarstellung des Verankerungsprinzips mit der vierten Ausführungsform anhand einer Seitenansicht, und
- Fig. 6:: eine Schrägansicht der erfindungsgemäßen Vorrichtung.

Im nachfolgenden Teil werden verschiedene erfindungsgemäße Ausführungen der Vorrichtung zum Verankern einer Arbeitsmaschine an einem Fundament vorgestellt. Die Verankerung in einem Ortbetonfundament soll die auftretenden Druck- und Zugkräfte in das Fundament einleiten.

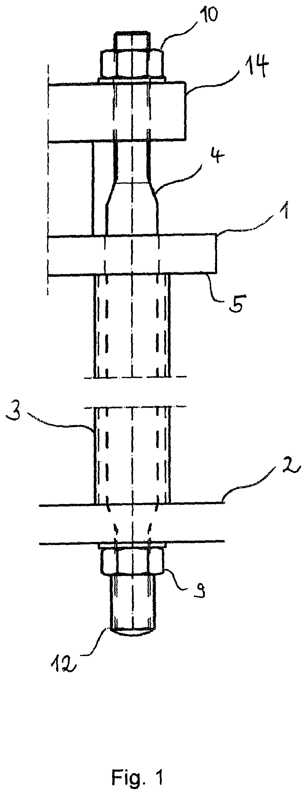

Fig. 1 zeigt eine Seitenansicht einer ersten Ausführungsform einer Verankerungsvorrichtung nach der Erfindung. Man erkennt die Aufnahmeplatte 1, die über ein Hohlrohr 3 mit der Gegenplatte 2 in Verbindung steht. In eine zu dem Hohlrohr 3 passende Öffnung ist das Zugelement 4 in das Hohlrohr 3 eingeführt. Darüber hinaus verläuft das Zugelement 4 durch eine Öffnung in der Gegenplatte 2, die ebenfalls im Bereich des Hohlrohrs 3 angeordnet ist. Das Zugelement 4 weist in dem Abschnitt, der auf der Seite der Gegenplatte 2, die der Aufnahmeplatte 1 abgewandt ist, ein Gewinde auf, das mit einer Mutter 9 beziehungsweise deren Innengewinde in einen Wirkverhältnis steht. Die Mutter 9 (Verankerungselement) sorgt dafür, dass eine Bewegung des Zugelements 4 in Richtung der Aufnahmeplatte 1, also aus der Öffnung der Gegenplatte 2 hinaus, unterbunden wird. Dadurch wird bei eventuell auftauchenden Zugkräften das Zugelement 4 mittels der Gegenplatte 2 festgehalten. Mit dem Bezugszeichen 12 ist eine Kappe bezeichnet, die auf das von der Gegenplatte 2 abstehende Ende des Zugelements 4 gesetzt wird, um bei einem Eingießvorgang eines Betonfundaments eine Verbindung von Zugelement 4 und Beton zu verhindern.

Darüber hinaus ist ein Drehsicherungselement 5 zu sehen, das in dieser Ausführung durch die Aufnahmeplatte 1 verkörpert ist. Das Drehsicherungselement 5 bzw. die Aufnahmeplatte 1 weist beispielsweise ein Durchgangsloch auf, dessen Querschnittsform einem Sechskant entspricht. Darüber hinaus weist auch das Zugelement 4 in dem durch das Durchgangsloch des Drehsicherungselements 5 bzw. der Aufnahmeplatte 1 verlaufenden Abschnitt eine entsprechende Außenkontur (im Beispiel ein Sechskant) auf, so dass bei entsprechender Ausrichtung der beiden Bauteile eine Rotation des Zugelements 4 bei einer ortsfesten Anordnung des Drehsicherungselements 5 bzw. Aufnahmeplatte ausgeschlossen ist.

Vorzugsweise wird, um Zugkräfte auf das Element 4 einleiten zu können, zudem ein Verspannmittel 10 auf ein Gewinde des Zugelements 4 geschraubt, wobei das Gewinde nahe einem Endabschnitt des Zugelements 4 angeordnet ist. Dadurch wird erreicht, dass das Zugelement 4 zwischen Gegenplatte 2 und einer Stabilisierungsplatte 14 verspannt wird. Zugkräfte, die in dieser Ausführungsform direkt von dem Stabilisierungsplatte 14 an das Zugelement 4 über das Verspannmittel 10 weitergegeben werden, können somit gut abgeleitet werden.

Die Stabilisierungsplatte 14 besitzt ein rundes Durchgangsloch, durch welches das Zugelement 4 hindurchritt. Dabei weist das Zugelement 4 in dem Bereich, der durch die Stabilisierungsplatte 14 tritt, ebenfalls einen kreisförmigen Querschnitt auf. Erst im Übergang von der Stabilisierungsplatte 14 und der Aufnahmeplatte1 bzw. dem Drehsicherungselement 5 ändert sich der Querschnitt des Zugelements 4 hin zu einem Sechskant. Die Stabilisierungsplatte 14 mit seinem Durchgangsloch dient zum Führen, Stabilisieren und Halten des Zugelements 4

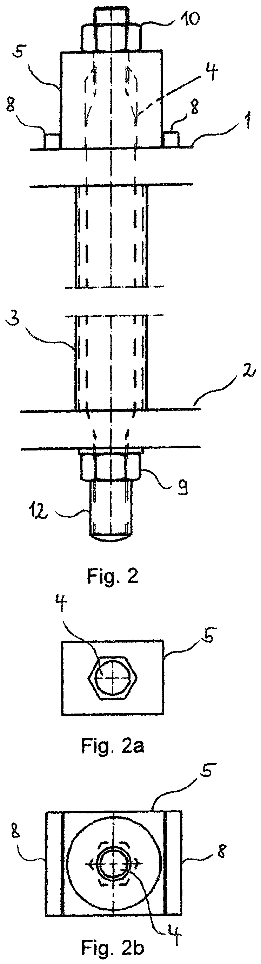

Fig. 2 zeigt eine zweite Ausführungsform zum Verankern einer Arbeitsmaschine an einem Fundament und unterscheidet sich von der vorausgehenden Ausführungsform insbesondere durch die unterschiedliche Ausführung des Drehsicherungselements. Darüber hinaus werden identische Bezugszeichen für identische Bauteile verwendet und nicht mehr oder nicht mehr in voller Ausführlichkeit erneut beschrieben.

Im Gegensatz zur ersten Ausführungsform liegt das Drehsicherungselement 5 nun auf der Aufnahmeplatte 1 auf und ist nicht durch die Aufnahmeplatte 1 verkörpert. Das Drehsicherungselement 5 weist ein Durchgangsloch auf, durch das das Zugelement 4 verläuft, und besitzt eine Innenquerschnittsfläche, die im Wesentlichen der Außenkontur des Zugelements 4 in diesem Bereich entspricht. Es ist jedoch anzumerken, dass das Drehsicherungselement 5 seine Innenquerschnittsfläche von kreisförmig zu einem Sechskant im Verlauf auf die Aufnahmeplatte 1 hin ändert. Zudem sind Arretiermittel 8 an der Aufnahmeplatte 1 ortsfest angeordnet, die eine Rotation des Drehsicherungselements 5 beziehungsweise des damit in Wirkverbindung stehenden Zugelements 4 unterbinden. Sollte also aufgrund einer von außen herrührenden Krafteinwirkung eine Rotationskraft entlang der Längsachse des Zugelements ausgeübt werden, so wirkt die Anordnung aus Drehsicherungselement 5 und Arretiermittel 8 dieser entgegen und verhindert eine Drehung des Zugelements 4. Dadurch ist ein ungewolltes Lösen des Zugelements 4 auch bei Fehlern während des Vorspannvorgangs von dem Verankerungselement 9 nicht möglich.

Fig. 2a zeigt eine Querschnittsansicht des Drehsicherungselements 5 nach der zweiten Ausführungsform, wobei die Schnittansicht auf der Höhe des Drehsicherungselements 5 geschnitten ist, in der das Zugelement 4 einen runden Querschnitt und das Drehsicherungselement 5 bereits eine sechskantförmige Ausnehmung aufweist. Man erkennt das Zugelement 4 im runden Abschnitt und die innere Grundform des Drehsicherungselements als Sechskant. Es ist demnach klar, dass bei Einführen eines Zugelements 4, das eine zu dem Durchgangsloch entsprechende äußere Form aufweist, ein Verdrehen des Zugelements 4 ohne Rotation des Drehsicherungselements 5 nicht möglich ist.

Fig. 2b zeigt eine Draufsicht der Fig. 2 ohne das zugehörige Verspannelement 10 (Mutter). Man erkennt die an gegenüberliegenden Seiten des Drehsicherungselements 5 angeordneten Arretiermittel 8 in Form von Anschlagleisten. Zudem erkennt man, dass durch das Durchgangsloch 7 tretende Zugelement 4.

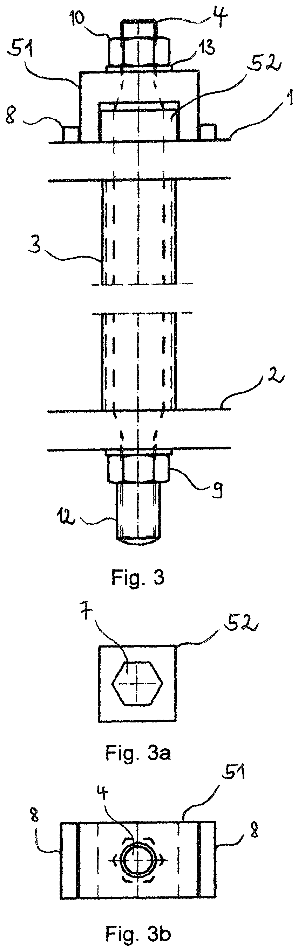

Fig. 3 zeigt eine dritte Ausführungsform der Vorrichtung zum Verankern einer Arbeitsmaschine an einem Fundament, die sich hauptsächlich in der mehrgliedrigen Ausführung des Drehsicherungselements 51, 52 von der vorausgehenden Ausführungsform unterscheidet.

Das Drehsicherungselement 5 in zwei Teile unterteilbar. Einen Innenteil 52 und einen diesen umgebenden Außenteil 51. Das an das Verspannmittel 10 angrenzende Außenteil 51 weist ein Durchgangsloch 7 auf, das einer kreisförmigen Bohrung entspricht. In diesem Abschnitt wird das Zugelement 4 mit seinem Gewindeabschnitt durchgeführt.

Darüber hinaus umfasst diese Ausführungsform eine für alle Ausführungsformen optionale Beilegscheibe 13, die zwischen Verspannmittel 10 und Drehsicherungselement 5 angeordnet ist. Dies hat den Vorteil einer gleichmäßigen Kraftübertragung des Verspannmittels 10 auf das Drehsicherungselement 5.

Das Drehsicherungselement 5 der dritten Ausführungsform besteht aus einem Innenteil 52 und einem an diesen angrenzenden Außenteil 51, der eine Ausnehmung aufweist, in die das Innenteil 52 einbringbar ist.

Vorteilhaft an dieser Ausführungsform ist die einfache Fertigung der einzelnen Bestandteile des Drehsicherungselements 5.

Wie in der Draufsicht auf das Innenteil 52 gezeigt, weist das Innenteil 52 ein Durchgangsloch 7 auf, das im Wesentlichen der Außenkontur des Zugelements 4 entspricht. Hierbei ist kein fertigungstechnisch aufwendiger Übergang verschiedenförmiger Querschnittsflächen in dem Durchgangsloch 7 vorzusehen. Vielmehr kann das Außenteil 51 eine kreisförmige Durchgangsbohrung aufweisen, durch die das Zugelement 4 durchgeführt wird. Die Drehsicherung wird dann durch das Innenteil 52 erlangt, das in einer Wirkverbindung mit dem Zugelement 4 steht. Die Wirkverbindung wird über das Außenteil 51 auf das Arretiermittel 8 übertragen.

Fig. 3b zeigt eine Draufsicht auf die dritte Ausführungsform der Verankerungsvorrichtung ohne Verspannmittel 10. Man erkennt das Zugelement 4, das durch das Durchgangsloch des Außenteils 51 tritt, sowie die an gegenüberliegenden Seiten des Außenteils 51 angeordneten Arretiermittel 8. Gestrichelt gekennzeichnet ist die Ausnehmung des Außenteils 51, in dem der Innenteil 52 aufgenommen wird.

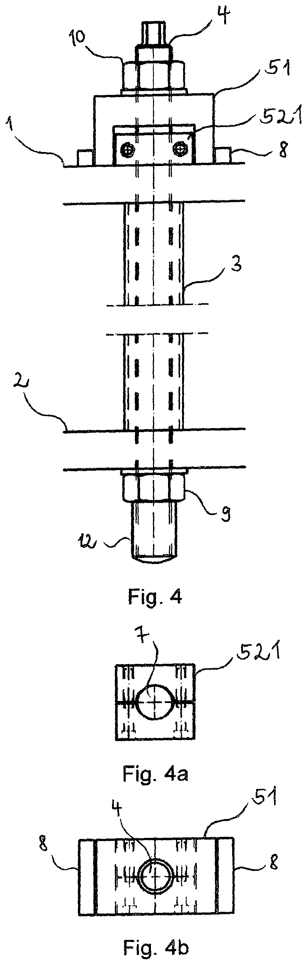

Fig. 4 zeigt eine vierte Ausführungsform der vorliegenden Erfindung, die sich zur vorausgehenden Ausführungsform darin unterscheidet, dass der Innenteil 52 des Drehsicherungselements 5 zweiteilig ausgeführt ist. Zudem umschließt der Innenteil 521 einen Bereich des Zugelements, der in seinem Querschnitt kreisförmig ausgebildet ist. Durch das als Spannelement 521 ausgebildete Innenteil 52 ist es dennoch möglich eine drehstarre Verbindung des Innenteils 52 zu dem Zugelement 4 herzustellen. Hierzu wird ein aus zwei Teilen bestehendes Element um das Zugelement gelegt und mit Klemmschrauben so an dem Zugelement fixiert, dass sich das Spannelement 521 bei einer Rotation des Zugelements 4 mitdreht.

Um ein Lösen des Zugelements 4 von dem Verankerungselement 9 zu erleichtern, ist an dem von der Gegenplatte 2 abgewandten Ende des Zugelements 4 eine zu einem Kreis verschiedene Querschnittsform vorgesehen, die der Einfachheit halber mit einem Hebelwerkzeug in Eingriff bringbar ist. Damit können größere Kräfte zur Drehung des Zugelements 4 beziehungsweise zum Lösen der Verankerungsverbindung mit dem Verankerungselement 9 aufgebracht werden.

Fig. 4a zeigt erneut eine Ansicht des Innenteils, hier in der Ausführungsform eines Spannelements 521, das mit Hilfe zweier Verbindungsschrauben drehfest an das Zugelement 4 anbringbar ist.

Fig. 4b zeigt eine Draufsicht auf die in Fig. 4 dargestellte Ausführungsform der Verankerungsvorrichtung ohne Verspannmittel, hier eine Mutter, in der das Zugelement 4, das Außenelement 51 des Drehsicherungselements 5 sowie die beiden Arretiermittel (Anschlagleisten) zu sehen sind.

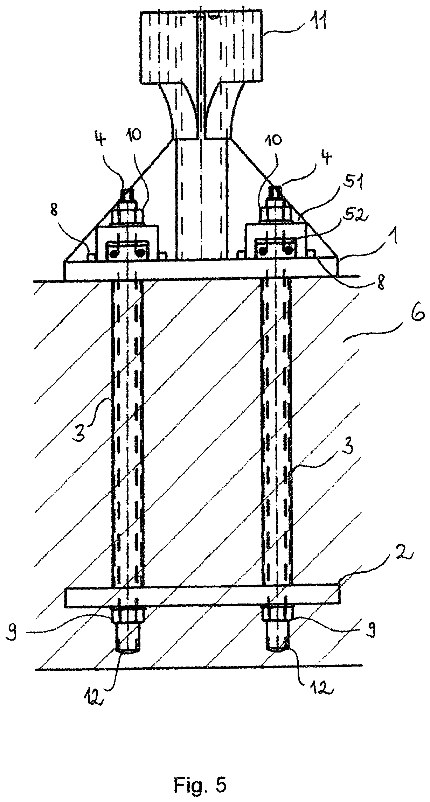

Fig. 5 zeigt eine Gesamtdarstellung des Verankerungsprinzips anhand der zuvor beschriebenen vierten Ausführungsform der Verankerungsvorrichtung. Man erkennt, dass die Aufnahmeplatte 1 auf einem Fundament 6 aufliegt und das Hohlrohr 3 sowie die Gegenplatte 2 und das Verankerungselement 9 von dem Fundament umschlossen sind. Werden nun Zugkräfte, also Kräfte, die die Aufnahmeplatte 1 aus dem Fundament 6 ziehen, aufgebracht, so werden diese durch die Verankerungsvorrichtung besonders effektiv in das Fundament eingeleitet.

Zudem erkennt man an der Aufnahmeplatte 1 angeformte Zapfenaufnahmen 11, die zur Verbindung mit einer Arbeitsmaschine verwendet werden.

Bei einem Verfahren zum Verankern einer Arbeitsmaschine an einem Fundament wird die Vorrichtung außerhalb des Einsatzortes vormontiert und am Einsatzort positioniert und ausgerichtet, bevor das Fundament 6 gegossen wird.

Bei einer Demontage der Verankerung ist das Verspannmittel 10, das das Zugelement 4 mit der Gegenplatte 2 verspannt, zu lösen, sämtliche auf dem Zugelement 4 aufgesteckten Bauteile, wie das Drehsicherungselement 5, das auch mehrteilig ausgeführt sein kann, von dem Zugelement abzunehmen und in einem nächsten Arbeitsschritt die Aufnahmeplatte von dem Fundament abzuheben. Zudem kann das Zugelement durch Ausführen einer Drehbewegung von dem Verankerungsmittel 9 gelöst werden und bei einem erneuten Aufbau einer Verankerungsvorrichtung wieder verwendet werden.

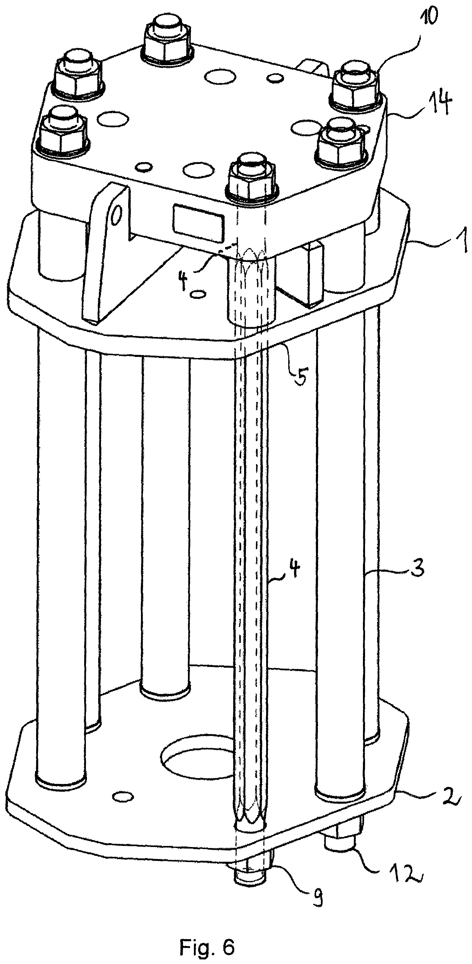

Fig. 6 zeigt eine Schrägansicht der erfindungsgemäßen Verankerung, bei dem große Übereinstimmungen mit der ersten Ausführungsform vorhanden sind. In dieser Figur sind mehrere der erfindungsgemäßen Vorrichtung dargestellt, die dazu dienen zusammen eine Arbeitsmaschine an einem Fundament zu verankern. Man erkennt das Zugelement 4, das einen Abschnitt aufweist, der im Wesentlichen einem Sechskant entspricht. Zudem weist das Zugelement 4 einen Abschnitt mit einem kreisförmigen Querschnitt auf. Das Drehsicherungselement 5 ist durch die Aufnahmeplatte 1 verkörpert und weist ein Durchgangsloch auf, das eine Innenquerschnittsform besitzt, die ein Drehen des als Sechskant ausgebildeten Zugelements 4 unterbindet. Zudem erkennt man die Gegenplatte 2 und das mit dem Zugelement 4 in einer Wirkverbindung stehende Verankerungselement 9. Die Kappe 12 dient zum Schutz vor einem Einfließen von Beton. Die Stabilisierungsplatte 14 mit seinem Durchgangsloch dient zum Führen, Stabilisieren und Halten des Zugelements 4. Das Hohlrohr 3 verbindet die Aufnahmeplatte 1 und die Gegenplatte 2. Zum besseren Verständnis der Erfindung ist das Hohlrohr 3 teilweise nicht dargestellt. Dadurch lässt sich die Querschnittsform des Zugelements 4 besser erkennen.

## Patentansprüche

1. Vorrichtung zum Verankern einer Arbeitsmaschine an einem Fundament (6), umfassend:
eine Aufnahmeplatte (1) zum Auflegen auf ein Fundament (6),
eine Gegenplatte (2) zum Eingießen in das Fundament (6),
ein Hohlrohr (3), das die Aufnahmeplatte (1) mit der Gegenplatte (2) verbindet und das von der von der Gegenplatte (2) abgewandten Seite der Aufnahmeplatte (1) zu seiner Innenseite zugänglich ist,
ein Zugelement (4) zum Einführen in das Hohlrohr (3), wobei das Zugelement (4) durch eine Drehbewegung lösbar mit der Gegenplatte (2) verankerbar ist, und ein Drehsicherungselement (5), das mit einer Außenkontur des Zugelements (4) in Verbindung steht und dieses drehfest anordnet,
**dadurch gekennzeichnet,**
**dass** das Drehsicherungselement (5) auf der von der Gegenplatte (2) abgewandten Seite der Aufnahmeplatte (1) angeordnet ist oder durch die Aufnahmeplatte (1) gebildet ist,
wobei das Drehsicherungselement (5) ein Durchgangsloch (7) umfasst, dessen Innenquerschnitt einem Außenquerschnitt des Zugelements (4) entspricht, und
wobei ein Arretiermittel (8) zum drehstarren Fixieren des Drehsicherungselements (5) bzw. des damit in Wirkverbindung stehenden Zugelements (4) vorgesehen ist, welches an der von der Gegenplatte (2) abgewandten Seite der Aufnahmeplatte (1) ortsfest angeordnet ist.

2. Vorrichtung nach Anspruch 1, wobei der Innenquerschnitt des Durchgangslochs (7) in einem Abschnitt einem Rundloch, einem Dreikant, einem Vierkant, einem Fünfkant, einem Sechskant, einem Siebenkant, einem Achtkant, einem Neunkant, einem Zehnkant, einem Elfkant oder einem Zwölfkant entspricht.

3. Vorrichtung nach einem der vorhergehenden Ansprüche, wobei das Arretiermittel (8) eine Anschlagleiste ist.

4. Vorrichtung nach einem der vorhergehenden Ansprüche, wobei das Zugelement (4) an dem zur Gegenplatte (2) nahen Ende ein Gewinde aufweist, das mit der Gegenplatte (2) selbst und/oder mit einem Verankerungselement (9), die an der von der Aufnahmeplatte (1) abgewandten Seite der Gegenplatte (2) angeordnet ist, durch eine Drehbewegung verbindbar ist.

5. Vorrichtung nach einem der vorhergehenden Ansprüche, wobei das Drehsicherungselement (5) auf der von der Gegenplatte (2) abgewandten Seite der Aufnahmeplatte (1) aufliegt.

6. Vorrichtung nach einem der vorhergehenden Ansprüche, wobei das Zugelement (4) ein Gewinde an seinem zur Aufnahmeplatte (1) nahen Ende aufweist, das eingreifbar zu einem Verspannmittel (10) ausgebildet ist.

7. Vorrichtung nach einem der vorhergehenden Ansprüche, ferner umfassend ein Verspannmittel (10), vorzugsweise eine Mutter, das in Eingriff mit dem Zugelement (4) steht und das Drehsicherungselement (5) in Richtung der Seite der Aufnahmeplatte (1) drängt, die von der Gegenplatte (2) abgewandt ist.

8. Vorrichtung nach einem der vorhergehenden Ansprüche, wobei das Drehsicherungselement (5) ein Innenteil (52), das mit der Außenkontur des Zugelements (4) direkt in Verbindung steht, und ein an das Innenteil (52) angrenzendes Außenteil (51) umfasst.

9. Vorrichtung nach Anspruch 8, wobei das Innenteil (52), das mit der Außenkontur des Zugelements (4) direkt in Verbindung steht, ein Spannelement (521) ist, das durch eine Klemmverbindung drehstarr an die Außenkontur des Zugelements (4) angebracht werden kann.

10. Vorrichtung nach einem der vorhergehenden Ansprüche, wobei das Zugelement (4) eine Gewindestange ist, die vorzugsweise in ihren beiden Enden eine kleinere Querschnittsfläche aufweist als in einem die beiden Enden verbindenden Abschnitt.

11. Vorrichtung nach einem der vorhergehenden Ansprüche, wobei das Zugelement (4) in einem mit der Gegenplatte (2) verankerten Zustand auf der von der Gegenplatte (2) abgewandten Seite der Aufnahmeplatte (1) einen Abschnitt aufweist, der in seinem Querschnitt einem Kreis, einem Dreikant, einem Vierkant, einem Fünfkant, einem Sechskant, einem Siebenkant, einem Achtkant, einem Neunkant, einem Zehnkant, einem Elfkant oder einem Zwölfkant entspricht.

12. Vorrichtung nach einem der vorhergehenden Ansprüche, wobei die Aufnahmeplatte (1) einen Zapfen und/oder eine Zapfenaufnahme (11) zum Befestigen der Arbeitsmaschine aufweist, wobei der Zapfen und/oder die Zapfenaufnahme (11) senkrecht von der von der Gegenplatte (2) abgewandten Seite der Aufnahmeplatte (1) absteht.

13. Verfahren zur Verankerung einer Arbeitsmaschine an einem Fundament (6) mit einer Vorrichtung nach einem der Ansprüche 1-12, wobei die Vorrichtung vollständig außerhalb des Einsatzortes vormontiert und am Einsatzort positioniert und ausgerichtet wird, bevor das Fundament (6) gegossen wird.

14. Verfahren zur Demontage einer Ankervorrichtung nach einem der Ansprüche 1-12, umfassend:
Lösen eines Verspannmittels (10), vorzugweise eine Mutter, das in Eingriff mit einem Zugelement (4) steht,
Abheben und/oder Demontieren eines Drehsicherungselements (5), das in einem montierten Zustand das Zugelement (4) drehstarr fixiert, und
Ausführen einer Drehbewegung des Zugelements (4), um eine Verankerungsverbindung mit einer Gegenplatte (2) oder mit einem das Zugelement (4) an der Gegenplatte (2) verankernden Verankerungselement (9) zu lösen.

## Claims

1. An apparatus for anchoring a work machine to a foundation (6) comprising:
a mounting plate (1) for placing on a foundation (6);
a counter-plate (2) for casting in the foundation (6);
a hollow pipe (3) that connects the mounting plate (1) to the counter-plate (2) and that is accessible toward its inner side from the side of the mounting plate (1) remote from the counter-plate (2); and
a tensile element (4) for introduction into the hollow pipe (3), wherein the tensile element (4) is releasably anchorable to the counter-plate (2) by a rotational movement, and
an element providing security against rotation (5) that is connected to an outer contour of the tensile element (4) and arranges it in a rotationally fixed manner,
**characterized in that**
the element providing security against rotation (5) is arranged at the side of the mounting plate (1) remote from the counter-plate (2) or is formed by the mounting plate (1),
with the element providing security against rotation (5) comprising a passage hole (7) whose inner cross-section corresponds to an outer cross-section of the tensile element (4), and
with a locking means (8) for a rotationally rigid fixing of the element providing security against rotation (5) or of the tensile element (4) operatively connected therewith being provided that is arranged in a fixed position on the side of the mounting plate (1) remote from the counter-plate (2).

2. An apparatus in accordance with claim 1, wherein the inner cross-section of the passage hole (7) corresponds in a section to a round hole, to a three-angled form, to a four-angled form, to a five-angled form, to a six-angled form, to a seven-angled form, to an eight-angled form, to a nine-angled form, to a ten-angled form, to an eleven-angled form or to a twelve-angled form.

3. An apparatus in accordance with one of the preceding claims, wherein the locking means (8) is a stop bar.

4. An apparatus in accordance with one of the preceding claims, wherein the tensile element (4) has a thread at the end close to the counter-plate (2), said thread being connectable by a rotational movement to the counter-plate (2) itself and/or to an anchoring element (9) that is arranged at the side of the counter-plate (2) remote from the mounting plate (1).

5. An apparatus in accordance with one of the preceding claims, wherein the element providing security against rotation (5) lies on the side of the mounting plate (1) remote from the counter-plate (2).

6. An apparatus in accordance with one of the preceding claims, wherein the tensile element (4) has a thread at its end close to the mounting plate (1), said thread being formed as engageable to a clamping means (10).

7. An apparatus in accordance with one of the preceding claims, further comprising a clamping means (10), preferably a nut, that is in engagement with the tensile element (4) and urges the element providing security against rotation (5) in the direction of the side of the mounting plate (1) that is remote from the counter-plate (2).

8. An apparatus in accordance with one of the preceding claims, wherein the element providing security against rotation (5) comprises an inner part (52) that is directly connected to the outer contour of the tensile element (4) and comprises an outer part (51) adjacent to the inner part (52).

9. An apparatus in accordance with claim 8, wherein the inner part (52) that is directly connected to the outer contour of the tensile element (4) is a clamping element (521) that can be rotationally rigidly attached to the outer contour of the tensile element (4) by a clamp connection.

10. An apparatus in accordance with one of the preceding claims, wherein the tensile element (4) is a threaded bar that preferably has a smaller cross-sectional area in its two ends than in a section connecting the two ends.

11. An apparatus in accordance with one of the preceding claims, wherein the tensile element (4) has a section at the side of the mounting plate (1) remote from the counter-plate (2) in a state anchored to the counter-plate (2) whose cross-section corresponds to a circle, to a three-angled form, to a four-angled form, to a five-angled form, to a six-angled form, to a seven-angled form, to an eight-angled form, to a nine-angled form, to a ten-angled form, to an eleven-angled form or to a twelve-angled form.

12. An apparatus in accordance with one of the preceding claims, wherein the mounting plate (1) has a pin and/or a pin mount (11) for fastening the work machine, wherein the pin and/or the pin mount (11) projects perpendicular from the side of the mounting plate (1) remote from the counter-plate (2).

13. A method of anchoring a work machine to a foundation (6) with an apparatus in accordance with one of the claims 1 to 12, wherein the apparatus is preassembled completely outside the site of operation and is positioned and aligned at the site of operation before the foundation (6) is cast.

14. A method of dismantling an anchoring apparatus in accordance with one of the claims 1-12, comprising:
releasing a clamping means (10), preferably a nut, that is in engagement with a tensile element (4);
lifting and/or dismantling an element providing security against rotation (5) that rotationally rigidly fixes the tensile element (4) in an assembled state; and
carrying out a rotational movement of the tensile element (4) to release an anchoring connection to a counter-plate (2) or to an anchoring element (9) anchoring the tensile element (4) to the counter-plate (2).

## Revendications

1. Dispositif d'ancrage d'une machine de travail à une fondation (6), comprenant :
une plaque de réception (1) destinée à être posée sur une fondation (6),
une contre-plaque (2) destinée à être coulée dans la fondation (6),
un tube creux (3), qui relie la plaque de réception (1) à la contre-plaque (2) et dont le côté intérieur est accessible depuis le côté de la plaque de réception (1) opposé à la contre-plaque (2),
un élément de traction (4) destiné à être introduit dans le tube creux (3), l'élément de traction (4) pouvant être ancré de manière détachable à la contre-plaque (2) par un mouvement rotatif, et
un élément antirotation (5), qui est en liaison avec un contour extérieur de l'élément de traction (4) et dispose celui-ci de manière bloquée en rotation,
**caractérisé en ce que**
l'élément antirotation (5) est disposé sur le côté de la plaque de réception (1) opposé à la contre-plaque (2) ou est formé par la plaque de réception (1),
l'élément antirotation (5) comprenant un trou traversant (7), dont la section transversale intérieure correspond à une section transversale extérieure de l'élément de traction (4), et
un moyen de blocage (8) destiné à la fixation bloquée en rotation de l'élément antirotation (5), ou de l'élément de traction (4) qui est en liaison fonctionnelle avec celui-ci, étant prévu, qui est disposé fixe sur le côté de la plaque de réception (1) opposé à la contre-plaque (2).

2. Dispositif selon la revendication 1, dans lequel la section transversale intérieure du trou traversant (7) correspond, dans un segment, à un trou rond, à un triangle, à un quadrilatère, à un pentagone, à un hexagone, à un heptagone, à un octogone, à un ennéagone, à un décagone, à un hendécagone ou à un dodécagone.

3. Dispositif selon l'une des revendications précédentes, dans lequel le moyen de blocage (8) est une barre de butée.

4. Dispositif selon l'une des revendications précédentes, dans lequel l'élément de traction (4) comporte, sur l'extrémité proche de la contre-plaque (2), un filetage, qui peut être relié par un mouvement de rotation à la contre-plaque (2) elle-même et/ou à un élément d'ancrage (9), qui est disposé sur un côté de la contre-plaque (2) opposé à la plaque de réception (1).

5. Dispositif selon l'une des revendications précédentes, dans lequel l'élément antirotation (5) repose sur le côté de la plaque de réception (1) opposé à la contre-plaque (2).

6. Dispositif selon l'une des revendications précédentes, dans lequel l'élément de traction (4) comporte, sur son extrémité proche de la plaque de réception (1), un filetage, qui est réalisé de manière à pouvoir être amené en prise avec un moyen de serrage (10).

7. Dispositif selon l'une des revendications précédentes, comprenant en outre un moyen de serrage (10), de préférence un écrou, qui est en prise avec l'élément de traction (4) et pousse l'élément antirotation (5) en direction du côté de la plaque de réception (1) qui est opposé à la contre-plaque (2).

8. Dispositif selon l'une des revendications précédentes, dans lequel l'élément antirotation (5) comprend une partie intérieure (52), qui est en liaison directe avec le contour extérieur de l'élément de traction (4) et une partie extérieure (51) adjacente à la partie intérieure (52).

9. Dispositif selon la revendication 8, dans lequel la partie intérieure (52), qui est en liaison directe avec le contour extérieur de l'élément de traction (4), est un élément de serrage (521), qui peut être monté sur le contour extérieur de l'élément de traction (4) de manière bloquée en rotation par une liaison par serrage.

10. Dispositif selon l'une des revendications précédentes, dans lequel l'élément de traction (4) est une tige filetée, qui comporte de préférence, au niveau de ses deux extrémités, une surface de section transversale inférieure à celle d'un segment reliant les deux extrémités.

11. Dispositif selon l'une des revendications précédentes, dans lequel l'élément de traction (4) comporte, dans un état ancré à la contre-plaque (2), un segment sur le côté de la plaque de réception (1) opposé à la contre-plaque (2), qui correspond, dans sa section transversale, à un cercle, à un triangle, à un quadrilatère, à un pentagone, à un hexagone, à un heptagone, à un octogone, à un ennéagone, à un décagone, à un hendécagone ou à un dodécagone.

12. Dispositif selon l'une des revendications précédentes, dans lequel la plaque de réception (1) comporte un taquet et/ou un logement de taquet (11) destiné à la fixation de la machine de travail, le taquet et/ou le logement de taquet (11) dépassant verticalement du côté de la plaque de réception (1) opposé à la contre-plaque (2).

13. Procédé d'ancrage d'une machine de travail sur une fondation (6) au moyen d'un dispositif selon l'une des revendications 1 à 12, dans lequel le dispositif est entièrement monté préalablement hors du lieu d'exploitation et positionné et orienté sur le lieu d'exploitation avant que la fondation (6) soit coulée.

14. Procédé de démontage d'un dispositif d'ancrage selon l'une des revendications 1 à 12, comprenant :
le desserrage d'un moyen de serrage (10), de préférence un écrou, qui est en prise avec un élément de traction (4),
le retrait et/ou le démontage d'un élément antirotation (5), qui, dans un état monté, fixe de manière bloquée en rotation l'élément de traction (4), et
la réalisation d'un mouvement de rotation de l'élément de traction (4) pour desserrer une liaison d'ancrage à une contre-plaque (2) ou à un élément d'ancrage (9) ancrant l'élément de traction (4) à la contre-plaque (2).
